# EUROPÄISCHE PATENTSCHRIFT

(11) **EP 0 693 602 B1**
(45) Veröffentlichungstag und Bekanntmachung des Hinweises auf die Patenterteilung: **17.02.1999**
(21) Anmeldenummer: 95111310.9
(22) Anmeldetag: 19.07.1995
(51) Int. Cl.: E05B 13/00, E05B 63/04

(54) **Versenkbarer Verschluss für links- und rechts angeschlagene Schaltschranktüren**
Folding lock for left or right-hand switchboard cabinet door
Serrure encastrée pour porte d'armoire de commande suspendue soit à gauche, soit à droite

(30) Priorität: 22.07.1994 DE 4425970
(43) Veröffentlichungstag der Anmeldung: 24.01.1996
(73) Patentinhaber: EMKA BESCHLAGTEILE GmbH & Co. KG, D-42551 Velbert (DE)
(72) Erfinder: Sauerland, Manfred, D-45144 Essen (DE)
(74) Vertreter: Müller, Karl-Ernst, Dr., Dipl.-Ing.

(56) Entgegenhaltungen:
- EP-A- 0 261 266
- EP-A- 0 261 267
- WO-A-93/06324
- DE-U- 9 305 893

## Beschreibung

Die Erfindung betrifft einen versenkbaren Verschluß für Schaltschranktüren oder dergleichen mit einem Schließteil zur Längsverschiebung wenigstens einer Verriegelungsstange zum Verriegeln der Tür, wobei das Schließteil mittels einer Betätigungswselle mit einer auf der Außenseite der Tür von dem Türblatt wegklappbar angeordneten Handhabe zu seiner beim Verschwenken der Handhabe erfolgenden Betätigung gekoppelt ist, und mit einem auf der Außenseite der Tür angeordneten und eine Muldung zur oberflächenbündigen Aufnahme der eingeklappten Handhabe aufweisenden plattenartigen Aufsatz zur Verriegelung der Handhabe über ein in dem plattenartigen Aufsatz angeordnetes Schloß. Ein gattungsgemäßer versenkbarer Verschluß ist beispielsweise in der WO93/06324 beschrieben, bei welchem das Schloß in Verlängerung der Handhabe in dem plattenartigen Aufsatz angeordnet ist und die Handhabe an deren Stirnseite verriegelt.

Bei derartigen Verschlüssen besteht die Vorschrift, daß deren Handhabe zum Öffnen des Verschlusses jeweils in Richtung der Mitte des Türblatts zu schwenken ist, weshalb die Drehrichtung der Handhabe festgelegt und bei einer rechts beziehungsweise bei einer links angeschlagenen Tür unterschiedlich ist. Damit ist der Nachteil verbunden, daß bei den Herstellern von Schaltschränken und dergleichen Türen mit fest montierten Schwenkhebelverschlüssen sowohl im Rechtsanschlag als auch im Linksanschlag vorrätig gehalten werden müssen, was entsprechend aufwendig ist. Zwar ist der Umbau eines Schwenkhebels bei Wechsel des Türanschlages mit einer damit verbundenen Drehung der Tür möglich, jedoch ist die Demontage des Schwenkhebelverschlusses und dessen erneute Montage aufwendig.

Wie ohne weiteres ersichtlich, läßt sich der aus der gattungsbildenden WO93/06324 bekannte versenkbare Verschluß nicht ohne einen entsprechenden Aufwand drehen.

Der Erfindung liegt daher die Aufgabe zugrunde, einen versenkbaren Verschluß mit den eingangs genannten Merkmalen zur Verfügung zu stellen, der einen Umbau der Tür mit darauf montiertem Verschluß mit Änderung der Anschlagseite vereinfacht.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß der plattenartige Aufsatz einen seitlich an die Muldung anschließenden Teil zur Aufnahme des im Winkel zur durch die Klappbewegung definierten Bewegungsebene der Handhabe angeordneten Schlosses und ein an ihm geführtes schloßbetätigtes Übertragungsglied zur Ver- beziehungsweise Entriegelung der Handhabe in der Muldung aufweist und daß an den beiden Enden der Muldung je ein Durchbruch zum Lagern und Hindurchführen der Betätigungswelle der Handhabe ausgebildet ist.

Mit der Erfindung ist der Vorteil verbunden, daß für ein Drehen der Tür lediglich noch die Handhabe mit Betätigungswelle aus der Muldung des plattenartigen Aufsatzes gehoben und nach Drehen der Tür um 180 Grad ebenfalls um 180 Grad gedreht in die Muldung des plattenartigen Aufsatzes wieder einmontiert werden muß, was erfindungsgemäß deswegen möglich ist, weil das Schloß zur Verriegelung der Handhabe in dem plattenartigen Aufsatz seitlich zur Bewegungsebene der Handhabe angeordnet ist, so daß es auch beim Drehen der Tür und damit auch beim Drehen des an der Tür montierten plattenartigen Aufsatzes seine lagemäßige Zuordnung zur Handhabe nicht ändert. Gleichzeitig ist die Muldung zur Aufnahme der Handhabe bezüglich der Lagerung und des Hindurchsteckens der Betätigungswelle symmetrisch ausgebildet, so daß eine Drehung der Handhabe allein ausreicht.

Nach Ausführungsbeispielen der Erfindung ist vorgesehen, daß das Schloß in dem Aufnahmeteil des plattenartigen Aufsatzes parallel zur Türblattebene oder in einer leichten Abwinklung schräg dazu angeordnet ist, wobei mit der letzteren Möglichkeit die Zugänglichkeit der Schloßöffnung in dem plattenartigen Aufsatz verbessert ist.

Nach einem Ausführungsbeispiel der Erfindung ist der Aufnahmeteil des plattenartigen Aufsatzes zur Aufnahme von zwei zugeordneten und jeweils auf ein einziges Übertragungsglied wirkenden Schlössern eingerichtet, womit der Vorteil verbunden ist, daß unterschiedliche Schließsysteme mit unterschiedlichen Zugangsberechtigungen verwendet werden können; so sind zum einen Schlösser mit unterschiedlichen Schlüsseln aber auch Schlösser mit unterschiedlichen Schloßbauarten wie Magnetkartenschloß, Zylinderschloß etc. nebeneinander verwendbar.

Hierzu weist nach einem Ausführungsbeispiel der Erfindung der Aufnahmeteil des plattenartigen Aufsatzes jeweils von der auf der Türblattebene aufliegenden Rückseite her zugängliche Aufnahmeöffnungen für ein zugehöriges Schloß und auf seiner Vorderseite der Schloßform angepaßte Schloßöffnungen auf. Soweit nach einem Ausführungsbeispiel eine der beiden Schloßöffnungen mittels eines Blindstücks abdeckbar ist, so findet nur ein Schloß zum Verriegeln der Handhabe Anwendung; hierbei ist es möglich, entweder beim Drehen der Tür und damit des plattenartigen Aufsatzes das Schloß in der zugeordneten Aufnahmeöffnung zu belassen, wodurch eine geringfügige Lageveränderung des Schlosses eintritt oder aber das Schloß jeweils in die andere, nach dem Drehen der Tür gleichgelagerte Aufnahmeöffnung umzustecken.

Soweit es in Verbindung mit einer Ausbildung des Schließteils als ein wenigstens eine Verriegelungsstange führender Schloßkasten mit einem darin gelagerten und mit der Handhabe drehfest gekoppelten Ritzel zum Antrieb der Verriegelungsstange nachteilig ist, daß bei einer Drehung der Tür der Umbau des Schloßkastens auf die jeweils andere Öffnung zum Hindurchstecken der Handhabe erforderlich ist, sieht die Erfindung in einem weiteren Aspekt gemäß Anspruch 7 vor, daß in dem fest mit dem Türblatt verbundenen Schloßkasten zwei Ritzel angeordnet sind, die jeweils den Durchbrüchen zum Lagern und Hindurchführen der Betätigungswelle der Handhabe zugeordnet sind. Damit ist eine Bearbeitung der Schloßkastenbefestigung beim Drehen der Tür nicht erforderlich, weil jeweils beim Einmontieren der gedrehten Handhabe in den plattenartigen Aufsatz die an der Handhabe befindliche Betätigungswelle in das zugehörige Ritzel des Schloßkastens eingeschoben werden kann, so daß sich die entsprechende Betätigungsverbindung ergibt.

Nach einem Ausführungsbeispiel der Erfindung ist der Schloßkasten als ein einheitlicher sich über die Länge der Muldung in dem plattenartigen Aufsatz erstreckender Schloßkasten ausgebildet, in welchem die beiden Ritzel mit den entsprechenden Durchbrüchen in der Muldung fluchtend angeordnet sind. Alternativ kann aber nach einem Ausführungsbeispiel der Erfindung auch vorgesehen sein, daß zwei den Durchbrüchen zugeordnete Schloßkastenteile mit jeweils einem darin gelagerten Ritzel vorgesehen sind, wobei die Schloßkastenteile jeweils mittels eines diese zu einem einheitlichen Teil verbindenden Überbrückungsblechs zusammengefügt sind.

Eine weitere Ausführungsform der Erfindung hat den Gedanken zum Gegenstand, einen versenkbaren Verschluß an einer mit einem Schlüsselschild bereits versehenen Tür zu montieren; ein solches Schlüsselschild mit einer davon gehaltenen Betätigungswelle zum Aufsetzen eines Schlüssels zur Drehung der Betätigungswelle ist beispielsweise in der EP-B-0 261 267 beschrieben. Soweit Türen mit solchen Schlüsselschildern bereits ausgerüstet sind, soll eine Demontage des Schlüsselschildes beim Umbau der Tür auf einen versenkbaren Verschluß vermieden werden. Hierzu ist vorgesehen, daß der plattenartige Aufsatz auf seiner dem Türblatt zugewandten Seite eine sich über die Länge der Muldung erstreckende und der Form eines Schlüsselschildes angepaßte Ausnehmung zum Aufstülpen des plattenartigen Aufsatzes auf ein an dem Türblatt montiertes Schlüsselschild aufweist, so daß in vorteilhafter Weise ohne eine Demontage des Schlüsselschildes der plattenartige Aufsatz auf das Schlüsselschild aufgestülpt werden kann, wobei die Handhabe in das im Schlüsselschild befindliche Betätigungselement eingreift.

In der Zeichnung ist ein Ausführungsbeispiel der Erfindung beschrieben, welches nachstehend erläutert ist; es zeigen:
- Fig. 1: einen versenkbaren Verschluß in einer Vorderansicht,
- Fig. 2: eine Draufsicht auf einen an einem Türblatt montierten versenkbaren Verschluß,
- Fig. 3: eine Rückansicht des versenkbaren Verschlusses gemäß Figur 1,
- Fig. 4: eine Seitenansicht des versenkbaren Verschlusses.

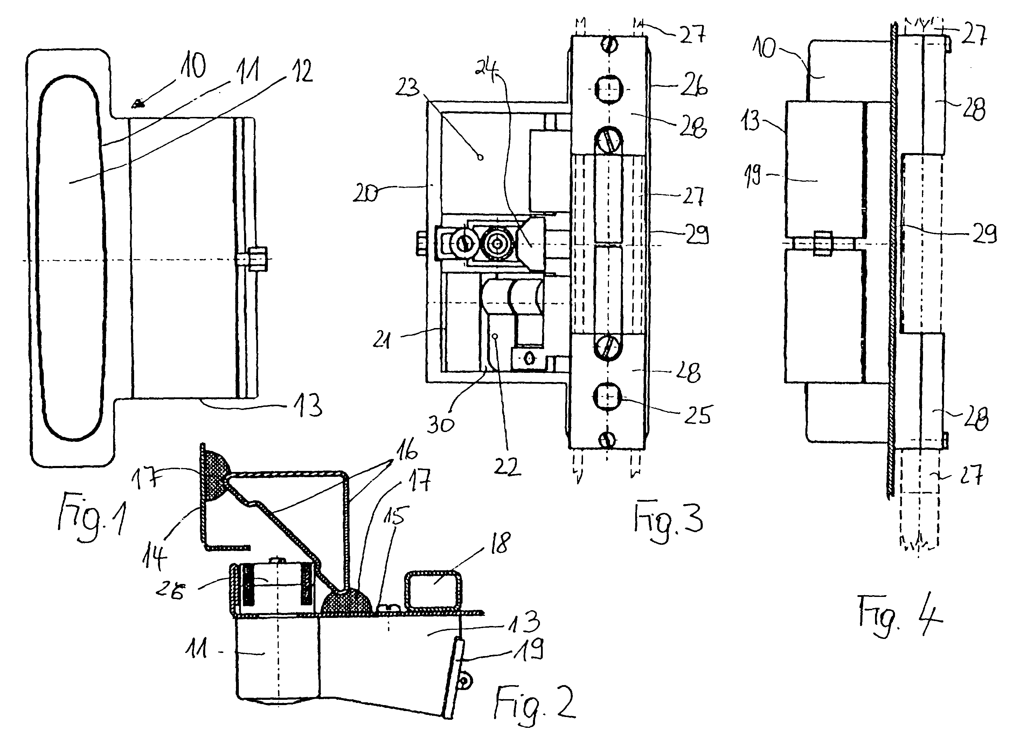

Wie sich aus einer Zusammenschau der Figuren 1 und 2 im einzelnen entnehmen läßt, weist der versenkbare Verschluß einen auf der Außenseite eines Türblattes 15 zu montierenden plattenartigen Aufsatz 10 mit einer an einer Seite darin angeordneten Muldung 11 zur Aufnahme einer Handhabe 12 auf; einseitig schließt an die Muldung 11 ein Aufnahmeteil 13 für eine noch zu beschreibende Schloßeinrichtung für die Verriegelung der Handhabe 12 in der Muldung 11 an.

Die Anordnung des plattenartigen Aufsatzes 10 läßt sich im einzelnen aus Figur 2 entnehmen, die die abgekantete Seitenwand 14 und das davor liegende Türblatt 15 erkennen läßt; Seitenwand 14 und Türblatt 15 schließen in einem durch ein Verstärkungseckprofil 16 abgegrenzten Bereich aneinander an, wobei Seitenwand 14 und Türblatt 15 gegen das Verstärkungseckprofil 16 jeweils über Dichtungen 17 abgedichtet sind; Bestandteil des Schrankaufbaus ist weiterhin ein Holm 18.

Wie sich weiterhin aus einer Zusammenschau der Figuren 2 und 3 entnehmen läßt, weist der Aufnahmeteil 13 an seiner in einer leichten Abwicklung schräg zum Türblatt 15 verlaufenden, der Muldung 11 abgekehrten Seitenfläche 19 jeweils eine Schloßöffnung zum Einstecken eines Schlüssels oder sonstigen Schloßbetätigungselementes in das in dem Aufnahmeteil 13 angeordnete Schloß auf; der Aufnahmeteil 13 ist in einen oberen Teil 20 und in einen unteren Teil 21 geteilt, wobei zwischen diesen beiden Teilen 20, 21 ein Übertragungsteil 24 angeordnet ist, welches in einer nicht weiter beschriebenen konstruktiven Ausbildung durch Betätigung mittels eines in den Teilen 20, 21 untergebrachten Schlosses dafür sorgt, daß die in der Muldung 11 liegende Handhabe 12 zum Ausschwenken freigegeben oder aber in der Muldung verriegelt wird. Bei dem dargestellten Ausführungsbeispiel ist nur in dem unteren Teil 21 des Aufnahmeteils 13 ein Zylinderschloß 22 angeordnet, während die in dem oberen Teil 20 angeordnete Aufnahmeöffnung 30 durch eine Abdeckplatte 23 abgedeckt ist.

Auf der Türinnenseite ist an dem Türblatt 15 ein sich über die Länge des plattenartigen Aufsatzes 10 erstreckender Schloßkasten 26 aufgeschraubt, der den in der rückwärtigen Ansicht zu erkennenden an den beiden Enden der Muldung 11 des plattenartigen Aufsatzes 10 angebrachten Durchbrüchen 25 zum Hindurchstecken der mit der Handhabe 12 verbundenen Betätigungswelle zugeordnet jeweils einen Schloßkastenteil 28 mit einem darin gelagerten mit der durch den Durchbruch 25 hindurchgesteckten Betätigungswelle drehfest zu verbindenden Ritzel aufweist, wobei entsprechend der Darstellung in Figur 4 die beiden Schloßkastenteile 28 durch ein Überbrückungsblech 29 zu dem einheitlichen Schloßkasten 26 verbunden sind. In dem Schloßkasten 26 beziehungsweise dessen beiden Schloßkastenteilen 28 sind die durch die darin gelagerten Ritzel antreibbaren Verriegelungsstangen 27 längsverschiebbar gelagert.

Bei der in den Figuren 1 und 2 in der zutreffenden Zuordnung dargestellten Schrankanordnung handelt es sich um eine solche mit einer rechts angeschlagenen Tür; soll das Türblatt 15 nun zum Zwecke des Umbaus auf Linksanschlag um 180 Grad gedreht werden, so reicht es aus, die Handhabe 12 aus der Muldung 11 des plattenartigen Aufsatzes 10 zu entnehmen und die Handhabe 12 dann ebenfalls um 180 Grad gedreht wieder in die Muldung 11 einzusetzen. Bei der Verschwenkung der Tür bleibt die Zuordnung des Schloßkastens 26 mit Verriegelungsstangen 27 zum Türblatt 15 erhalten, wobei aufgrund der symmetrischen Anordnung der Durchbrüche 25 für die an der Handhabe 12 sitzende Betätigungswelle und der dahinterliegenden Schloßkastenteile 28 mit zugeordneten Ritzeln die Drehung der Handhabe 15 wiederum zu einer funktionsgerechten Vervollständigung des Verschlusses führt.

## Patentansprüche

1. Versenkbarer Verschluß für Schaltschranktüren oder dergleichen mit einem Schließteil zur Längsverschiebung wenigstens einer Verriegelungsstange (27) zum Verriegeln der Tür, wobei das Schließteil mittels einer Betätigungswelle mit einer auf der Außenseite der Tür von dem Türblatt wegklappbar angeordneten Handhabe (12) zu seiner beim Verschwenken der Handhabe (12) erfolgenden Betätigung gekoppelt ist, und mit einem auf der Außenseite der Tür angeordneten und eine Muldung (11) zur oberflächenbündigen Aufnahme der eingeklappten Handhabe (12) aufweisenden plattenartigen Aufsatz (10) zur Verriegelung der Handhabe (12) über ein in dem plattenartigen Aufsatz angeordnetes Schloß (22), dadurch gekennzeichnet, daß der plattenartige Aufsatz (10) einen seitlich an die Muldung (11) anschließenden Teil (13) zur Aufnahme des im Winkel zur durch die Klappbewegung definierten Bewegungsebene der Handhabe (12) angeordneten Schlosses (22) und ein an ihm geführtes schloßbetätigtes Übertragungsglied (24) zur Ver- beziehungsweise Entriegelung der Handhabe (12) in der Muldung (11) aufweist und daß an den beiden Enden der Muldung (11) je ein Durchbruch (25) zum Lagern und Hindurchführen der Betätigungswelle der Handhabe (12) ausgebildet ist.

2. Verschluß nach Anspruch 1, dadurch gekennzeichnet, daß das Schloß (22) in dem Aufnahmeteil (13) des plattenartigen Aufsatzes (10) parallel zur Ebene des Türblatts (15) angeordnet ist.

3. Verschluß nach Anspruch 1, dadurch gekennzeichnet, daß das Schloß (22) in dem Aufnahmeteil (13) des plattenartigen Aufsatzes (10) in einer leichten Abwinklung schräg zur Ebene des Türblatts (15) angeordnet ist.

4. Verschluß nach einem der Ansprüche 1 bis 3, dadurch gekennzeichnet, daß der Aufnahmeteil (13) des plattenartigen Aufsatzes (10) zur Aufnahme von zwei zugeordneten und jeweils auf ein einziges Übertragungsglied (24) wirkenden Schlössern (22) eingerichtet ist.

5. Verschluß nach einem der Ansprüche 1 bis 4, dadurch gekennzeichnet, daß der Aufnahmeteil (13) des plattenartigen Aufsatzes (10) jeweils von der auf dem Türblatt (15) aufliegenden Rückseite des plattenartigen Aufsatzes (10) her zugängliche Aufnahmeöffnungen (30) für ein zugeordnetes Schloß (22) und auf seiner Vorderseite der Schloßform angepaßte Schloßöffnungen aufweist.

6. Verschluß nach einem der Ansprüche 1 bis 5, dadurch gekennzeichnet, daß eine der beiden Schloßöffnungen mittels eines Blindstückes abdeckbar ist.

7. Verschluß nach dem Oberbegriff des Anspruchs 1, insbesondere nach einem der Ansprüche 1 bis 6, wobei der Schließteil als ein wenigstens eine Verriegelungsstange führender Schloßkasten (26) mit einem darin gelagerten und mit der Handhabe drehfest gekoppelten Ritzel zum Antrieb der Verriegelungsstange (27) ausgebildet ist, dadurch gekennzeichnet, daß in dem fest mit dem Türblatt (15) verbundenen Schloßkasten (26) zwei Ritzel angeordnet sind, die jeweils den beiden Durchbrüchen (25) zum Lagern und Hindurchführen der Betätigungswelle der Handhabe (12) zugeordnet sind.

8. Verschluß nach Anspruch 7, dadurch gekennzeichnet, daß ein einheitlicher, sich über die Länge der Muldung (11) in dem plattenartigen Aufsatz (10) erstreckender Schloßkasten (26) vorgesehen ist.

9. Verschluß nach Anspruch 7, dadurch gekennzeichnet, daß zwei jeweils den Durchbrüchen (25) zugeordnete Schloßkastenteile (28) mit jeweils einem darin gelagerten Ritzel vorgesehen sind, wobei die Schloßkastenabschnitte (28) mittels eines diese zu einem einheitlichen Teil verbindenden Überbrückungsblechs (29) zusammengefügt sind.

10. Verschluß nach einem der Ansprüche 1 bis 9, dadurch gekennzeichnet, daß der plattenartige Aufsatz (10) auf seiner dem Türblatt (15) zugewandten Seite eine sich über die Länge der Muldung (11) erstreckende und der Form eines Schlüsselschildes angepaßte Ausnehmung zum Aufstülpen des plattenartiges Aufsatzes (10) auf ein an dem Türblatt (15) montiertes Schlüsselschild aufweist.

## Claims

1. Recessible closure for switchgear cabinet doors or suchlike, with a closing part for the longitudinal displacement of at least one locking bar (27) for locking the door, the closing part being coupled, by means of an actuating shaft, to a handle (12), which is disposed on the outside of the door and can be tilted away from the door leaf, to actuate the closing part when the handle (12) is tilted, and with a plate-type fixture (10), disposed on the outside of the door and having a depression (11) for accommodating the retracted handle (12) flush with the surface, for locking the handle (12) by means of a lock (22) disposed in the plate-type fixture, characterized in that the plate-type fixture (10) has a part (13), laterally adjoining the depression (11), for accommodating the lock (22) disposed at an angle to the plane of motion of the handle (12) defined by the tilting motion and, located on the part, a lock-actuated transmission element (24) for locking and unlocking the handle (12) in the depression (11), and that at each end of the depression (11) there is fashioned a through hole (25) for the location and through passage of the actuating shaft of the handle (12).

2. Closure according to Claim 1, characterized in that the lock (22) is disposed in the accommodating part (13) of the plate-type fixture (10), in parallel to the plane of the door leaf (15).

3. Closure according to Claim 1, characterized in that the lock (22) is disposed in the accommodating part (13) of the plate-type fixture (10), slightly offset at an oblique angle to the plane of the door leaf (15).

4. Closure according to any one of Claims 1 to 3, characterized in that the accommodating part (13) of the plate-type fixture (10) is arranged to accommodate two corresponding locks (22), each acting on a single transmission element (24).

5. Closure according to any one of Claims 1 to 4, characterized in that the accommodating part (13) of the plate-type fixture (10) has mounting openings (30), each accessible from the back face of the plate-type fixture (10) which lies on the door leaf (15), for a corresponding lock (22) and, on its front face, lock openings adapted to the shape of the lock.

6. Closure according to any one of Claims 1 to 5, characterized in that one of the two lock openings can be covered by means of a blind piece.

7. Closure according to the pre-characterizing clause of Claim 1, particularly according to one of Claims 1 to 6, the closing part being designed as a lock case (26), comprising at least one locking bar, with a pinion mounted within it which is coupled to the handle in a torsionally rigid manner for the purpose of actuating the locking bar (27), characterized in that there are disposed in the lock case (26) which is fixed to the door leaf (15) two pinions which respectively correspond to the two through holes (25) for the location and through passage of the actuating shaft of the handle (12).

8. Closure according to Claim 7, characterized in that there is provided a unitary lock case (26) which extends over the length of the depression (11) in the plate-type fixture (10).

9. Closure according to Claim 7, characterized in that there are provided two lock case parts (28) respectively corresponding to the through holes (25) and each with a pinion mounted within it, the lock case sections (28) being coupled by means of a bridging plate (29) which joins them to form a unitary part.

10. Closure according to any one of Claims 1 to 9, characterized in that the plate-type fixture (10) has on its side which faces towards the door leaf (15) a recess, extending over the length of the depression (11) and adapted to the shape of a keyplate, for the purpose of fitting the plate-type fixture (10) on to a keyplate mounted on the door leaf (15).

## Revendications

1. Fermeture escamotable pour des portes d'armoire de commande ou similaires, comportant un élément de fermeture pour le déplacement longitudinal au moins d'une tringle de verrouillage (27) pour le verrouillage de la porte, l'élément de fermeture étant couplé au moyen d'un arbre de manoeuvre, avec une manette (12), disposée sur le côté extérieur de la porte et rabattable du vantail de porte pour sa manoeuvre ayant lieu lors du pivotement de la manette (12), et comportant un élément saillant (10) en forme de plaque, qui est disposé sur le côté extérieur de la porte, qui présente une formation en auge (11) pour le logement à fleur de la surface de la manette (12) escamotable, et qui est destiné au verrouillage de la manette (12) par l'intermédiaire d'une serrure (22) disposée dans l'élément saillant en forme de plaque, caractérisée en ce que l'élément saillant (10) en forme de plaque présente une partie (13) adjacente sur le côté à la formation en auge (11) et destinée au logement de la serrure (22) disposée dans l'angle par rapport au plan de déplacement de la manette (12) défini par le mouvement de rabattement, ainsi qu'un organe de transmission (24) actionné par la serrure, guidé contre elle et destiné au verrouillage et déverrouillage de la manette (12) dans la formation en auge (11), et en ce qu'aux deux extrémités de la formation en auge (11), une ouverture (25) est respectivement réalisée pour le placement et le passage de l'arbre de manoeuvre de la manette (12).

2. Fermeture selon la revendication 1, caractérisée en ce que la serrure (22) est disposée, parallèlement au plan de vantail de porte (15), dans l'élément de logement (13) de l'élément saillant (10) en forme de plaque.

3. Fermeture selon la revendication 1, caractérisée en ce que la serrure (22) est disposée dans l'élément de logement (13) de l'élément saillant (10) en forme de plaque, faisant un léger coude, en biais par rapport au plan du vantail de porte (15).

4. Fermeture selon l'une quelconque des revendications 1 à 3, caractérisée en ce que l'élément de logement (13) de l'élément saillant (10) en forme de plaque est prévu pour le logement de deux serrures (22) coordonnées et opérant respectivement sur un seul organe de transmission (24).

5. Fermeture selon l'une quelconque des revendications 1 à 4, caractérisée en ce que l'élément de logement (13) de l'élément saillant (10) en forme de plaque présente respectivement des ouvertures de logement (30) accessibles à partir du côté postérieur - appliqué sur le vantail de porte (15) - de l'élément saillant (10) en forme de plaque, et destinées à une serrure (22) correspondante et sur son côté antérieur, des ouvertures de serrure adaptées à la forme de la serrure.

6. Fermeture selon l'une quelconque des revendications 1 à 5, caractérisée en ce que l'une des deux ouvertures de serrure peut être couverte au moyen d'un élément d'obturation.

7. Fermeture selon le préambule de la revendication 1, notamment selon l'une quelconque des revendications 1 à 6, caractérisée en ce que l'élément de fermeture est réalisé comme un palastre (26) guidant au moins une tringle de verrouillage et comportant un pignon qui est placé dans ledit palastre et qui est couplé de manière fixe avec la manette pour l'entraînement de la tringle de verrouillage (27), caractérisée en ce que dans le palastre (26) assemblé de manière fixe avec le vantail de porte (15) sont disposés deux pignons qui sont respectivement affectés aux deux ouvertures (25) destinées au placement et au passage de l'arbre de manoeuvre de la manette (12).

8. Fermeture selon la revendication 7, caractérisée en ce qu'il est prévu un palastre (26) unique, s'étendant sur la longueur de la formation en auge (11) dans l'élément saillant (10) en forme de plaque.

9. Fermeture selon la revendication 7, caractérisée en ce que deux éléments de palastre (28) respectivement affectés aux ouvertures (25) sont prévus avec respectivement un pignon placé dans ledit palastre, les sections de palastre (28) étant assemblées à l'aide d'une tôle de recouvrement (29) assemblant lesdites sections pour former un élément unique.

10. Fermeture selon l'une quelconque des revendications 1 à 9, caractérisée en ce que l'élément saillant (10) en forme de plaque présente sur son côté tourné vers le vantail de porte (15), un creux s'étendant sur la longueur de la formation en auge (11) et adapté à la forme d'un écusson pour mettre l'élément saillant (10) en forme de plaque sur un écusson monté sur le vantail de porte (15).
